# EUROPÄISCHE PATENTSCHRIFT

(11) **EP 0 597 917 B1**
(45) Veröffentlichungstag und Bekanntmachung des Hinweises auf die Patenterteilung: **06.03.1996**
(21) Anmeldenummer: 92916133.9
(22) Anmeldetag: 31.07.1992
(51) Int. Cl.: F16H 55/22

(54) **Welle mit angeformter Schnecke**
Shaft with shaped endless screw
Arbre façonné avec vis sans fin

(30) Priorität: 06.08.1991 DE 4126026
(43) Veröffentlichungstag der Anmeldung: 25.05.1994
(73) Patentinhaber: ITT Automotive Europe GmbH, D-60488 Frankfurt (DE)
(72) Erfinder: KLINAR, Robert, D-7120 Bietigheim-Bissingen (DE)
(74) Vertreter: Portwich, Peter
(86) Internationale Anmeldenummer: EP9201735
(87) Internationale Veröffentlichungsnummer: WO9303297

(56) Entgegenhaltungen:
- DE-A- 1 575 617
- DE-B- 1 083 621
- DE-C- 446 254
- GB-A- 2 008 995
- G. Niemann, H. Winter Maschinenelemente Band III (1983) Springer-Verlag Berlin Heidelberg New York Tokyo 1983 Seiten 67 und 69

## Beschreibung

Die Erfindung bezieht sich auf eine Welle, insbesondere eine Ankerwelle eines Elektromotors, mit einer angeformten Schnecke, wobei der Fußkreisdurchmesser der Schnecke kleiner ist als der Weilendurchmesser des oder der sich an die Schnecke unmittelbar anschließenden Teils bzw. der Teile der Welle. Solche Wellen mit angeformter Schnecke verwendet man beispielsweise dort, wo über einen Elektromotor eine Schnecke eines Schneckengetriebes angetrieben werden soll, wobei die Schnecke durchaus an die Ankerwelle des Elektromotors unmittelbar angeformt sein kann. Es kann sich sowohl um eine fliegend als auch um eine beidendig gelagerte Schnecke handeln. Im letzteren Falle kann der Durchmesser des sich an das eine Ende der Schnecke anschließenden Teils der Welle größer sein als der Durchmesser des sich an das andere Schneckenende anschließenden Teils der Welle. Denkbar ist aber auch, daß beidseits der Schnecke ein gleicher Wellendurchmesser vorliegt. Desweiteren kann der sich einenends und/oder andernends an die Welle unmittelbar anschließende Teil der Welle einen Durchmesser aufweisen, der gleich dem Kopfkreis der Schnecke, oder aber hiervon verschieden, beispielsweise größer, ist. Auf jeden Fall treten beim Betrieb einer solchen Schnecke dann Kerbspannungen am Übergang vom Schneckenanfang in den benachbarten Teil der Welle und/oder am Schneckenende in den dort sich anschließenden Teil der Welle auf, wenn der Fußkreisdurchmesser der Schnecke kleiner ist als der Durchmesser des sich einenends und/oder andernends unmittelbar anschließenden Teils der Welle. Dies ist insbesondere dann festzustellen, wenn die Schnecke durch Fräsen gebildet worden ist. Gerade im letzteren Falle ist es häufig so, daß der Kopfkreis der Schnecke dem Durchmesser der Welle bzw. dem Durchmesser des oder der sich unmittelbar an die Schnecke anschließenden Wellenteile entspricht. Der Grund liegt darin, daß ein abrupter Übergang vom Wellendurchmesser auf den Fußkreisdurchmesser erfolgt. Dies ist insbesondere dann zu beobachten, wenn die Schnecke mit einem Scheibenfräser erstellt wurde.

Aus der DE-C-446254 ist ein Fräser zur Herstellung von Holzschrauben beschrieben, bei dem in axialer Richtung dem Scheibenfräser ein Vorfräser vorgeschaltet ist, dessen Zähne niedriger sind als diejenigen des Scheibenfräsers, wobei in Achsrichtung gesehen der Abstand der Zahnmitten der Zähne des Vorfräsers von denen bzw. den benachbarten Zähnen des Scheibenfräsers einer Ganghöhe des Schraubenbolzens entspricht.

Die Zähne des Fräsers liegen auf einer Schraubenlinie, so daß der Fräskopf radial an den Schraubenrohling herangeführt werden muß, um eine Schraube herauszuformen. Diese Methode ist nicht geeignet, eine Schnecke herzustellen. Hier wird,wie schon erläutert, ein schräggestellter Scheibenfräser an den Rohling in axialer Richtung vorbeigeführt, um eine Schnecke zu erhalten.

Es liegt nun die Aufgabe vor, eine Welle der eingangs beschriebenen Art so weiterzubilden, daß keine oder allenfalls eine verringerte Kerbspannung am Übergang von der Welle in die Schnecke auftritt.

Zur Lösung dieser Aufgabe wird erfindungsgemäß vorgeschlagen, daß die Welle mit angeformter Schnecke gemäß dem Oberbegriff des Anspruchs 1 entsprechend dem kennzeichnenden Teil dieses Anspruchs ausgebildet ist. Weil nunmehr ein weniger abrupter Übergang vom Nutgrund der Schnecke in die benachbarte Welle stattfindet, verringert sich der Vollquerschnitt von der Welle zum Kern der Schnecke nicht in einem einzigen großen Sprung, und dadurch wird der Bildung von Kerbspannungen in diesem Bereich wirksam begegnet.

Wie man den Übergang vom vollen Wellendurchmesser auf den Kerndurchmesser der Schnecke vornimmt, hängt von den Abmessungen der Welle und der Schnecke sowie dem verwendeten Material und der zu erwartenden Belastung ab.

Bevorzugte Ausführungen kann man den Unteransprüchen 2 bis 5 entnehmen.

So erscheint es besonders günstig, wenn in dem Bereich verringerter Tiefe der Nut die Nuttiefe, in axialer Richtung vom Schneckenanfang bzw. Schneckenende hier fortschreitend, nicht konstant ist, sondern zunimmt. Dadurch kann eine stetige Abnahme des Kerndurchmessers der Welle bis zum ersten Zahn der Schnecke erhalten werden, wobei vorzugsweise vom Außendurchmesser der Welle ausgegangen wird, die Nuttiefe also von 0 an zunimmt.

Grundsätzlich kann der Nutboden in dem Bereich gekrümmt und zum Beispiel an die zylinderförmige Krümmung eines zum Kämmen mit der Schnecke vorgesehenen Schneckenrades angepaßt sein. Für die Herstellung des Fräsers günstiger erscheint jedoch eine lineare Zunahme der Nuttiefe in axialer Richtung.

Die Erfindung wird nachstehend anhand der Zeichnung näher erläutert. Die Zeichnung zeigt in
- Figur 1: einen halben Radialschnitt durch den erfindungsgemäßen Scheibenfräser mit einer Teildarstellung von Schnecke und Welle, in
- Figur 2: eine abgewickelte Darstellung der Nuttiefe beim Fortschreiten in Umlaufrichtung und in
- Figur 3: eine Ansicht in Richtung des Pfeiles P aus Figur 1.

Beim gezeichneten Ausführungsbeispiel entspricht der Kopfkreisdurchmesser 2 der Schnecke 3 dem Durchmesser der Welle 1. Die Schnecke 3 ist an die Welle 1 einstückig angeformt bzw. aus dem Material der Welle 1 herausgearbeitet.

Hierzu wurde ein Scheibenfräser 4 verwendet. Dieser ist erfindungsgemäß mit einem Vorfräser 5 verbunden, insbesondere einstückig hergestellt. Der links der gestrichelten Linie 6 befindliche Teil des gezeichneten Spezial-Scheibenfräsers entspricht der seitherigen Ausführungsform eines Scheibenfräsers zur Herstellung von Schnecken 3. Insofern bedarf es keiner näheren Erläuterung.

Der Vorfräser 5 fräst eine Vornut 20, die einen Nutboden 21 aufweist, der, in einem Radialschnitt der Welle 1 gesehen, vom Kopfkreis der Schnecke 3 aus schräg abfallend tiefer wird, und die vom Scheibenfräser 4 auf die volle Tiefe ausgeschnitten wird. Deshalb ist die Vornut 20 mit dem schrägen Nutboden 21 nach dem Fräsvorgang nur noch am Schneckenanfang bzw. Schneckenende auf einem bestimmten Umfangswinkel vorhanden.

Der Übergang zwischen der Vornut 20 mit dem Nutboden 21 und der vollen Welle sowie der Übergang von der Nut mit der vollen Tiefe auf die durch den Vorfräser erzeugte Tiefe der Vornut 20 wird beim Auseinanderfahren von Fräser und Welle am Schluß des Fräsvorgangs geschaffen, wie dies für den Übergang zur vollen Welle auch heute schon bei den gefrästen Schnecken der Fall ist.

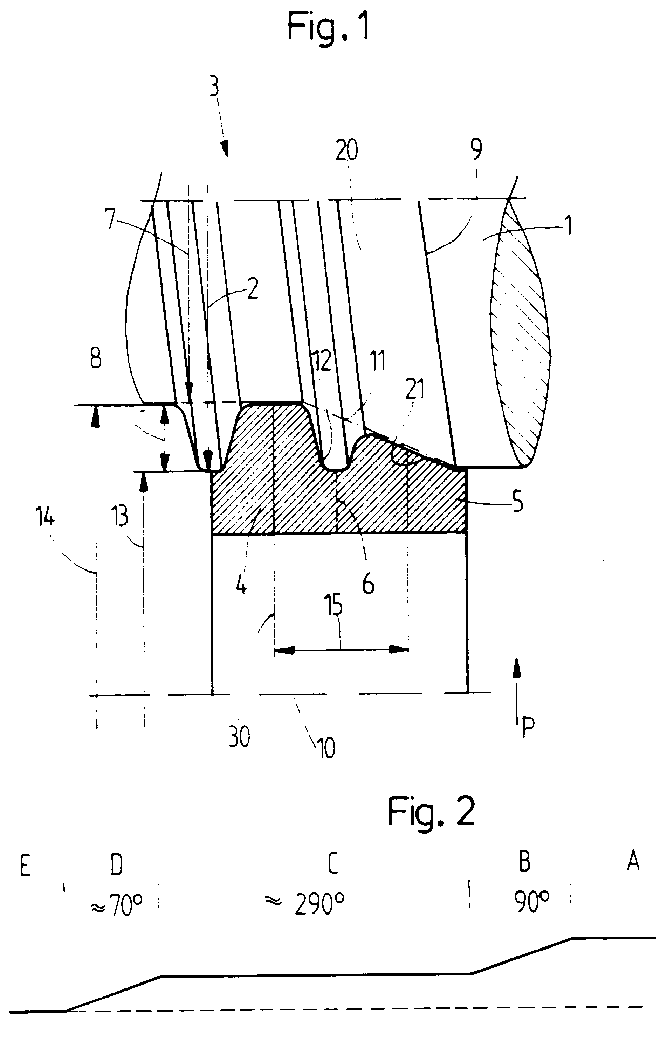

Schreitet man an der tiefsten Stelle der Vornut 20 am Fuß des ersten Schneckenganges in Umlaufrichtung fort, beginnend vom Auslauf des Vorfräsers, so hat man den in Figur 2 mit A bezeichneten Abschnitt der vollen Welle hinter sich. Die liefe der Nut nimmt zunächst über einen Winkel von 90° (Bereich B) zu, was dem Winkel entspricht, um den die Welle beim Auseinanderfahren von Welle und Fräser noch gedreht worden ist. Danach bleibt die Tiefe über etwa 290° (Bereich C) konstant, um dann über einen Winkel von etwa 70° (Bereich D) auf die volle Nuttiefe 8 abzufallen und im Bereich E diese Tiefe beizubehalten. Die Länge des Bereichs D von etwa nur 70° ist dadurch bedingt, daß der Fräser 4 bereits etwa nach diesem Winkel das in axialer Richtung tiefste Niveau der Vornut 20 erreicht, in dem wir fortgeschritten sind. Auf der anderen Seite der Vornut 20, wo deren Tiefe 0 ist, beträgt der Auslauf des Fräsers 4 natürlich 90°. Andererseits hat der Vorfräser 5 an letzterer Seite der Vornut 20 einen Auslaufwinkel 0, da er sich dort schon auf der Höhe des Durchmessers der Welle 1 befindet.

In der Zeichnung ist außer dem Kopfkreisdurchmesser 2 auch noch der fußkreisdurchmesser 7 der Schnecke 3 jeweils abgebrochen eingezeichnet. Damit liegt dann auch die Zahnhöhe der Schnecke 3 fest. Die Zahnhöhe nimmt aber gemäß der zeichnerischen Darstellung gegen die Welle 1 hin stetig ab. Es bleiben zwar die Teilung bzw. Ganghöhe 15 und der Kopfkreisdurchmesser 2 über die gesamte Schneckenlänge erhalten, jedoch vergrößert sich der Fußkreisdurchmesser im Anfangs- bzw. Endbereich der Schnecke 3 beim Ausführungsbeispiel gegen die Welle 1 hin bis auf den Wert des Kopfkreises 2. Falls sich an das nicht gezeichnete linke Ende der Schnecke 3 noch ein Teil der Welle 1 anschließt, dessen Durchmesser größer ist als der Fußkreisdurchmesser 7, so soll die Nuttiefe auch am nicht gezeichneten Schneckenende in der geschilderten Weise vom Wert "Null" auf den vollen Wert der Nuttiefe 8 ansteigen, wobei die Betrachtung jeweils vom rechten bzw. linken Ende der Schnecke zur Schneckenmitte hin gerichtet ist. Bezogen auf die Schnecke selbst steigt die Nuttiefe bei einer zwischen zwei Teilen einer Welle 1 befindlichen Schnecke 3 am Schneckenanfang dann am Schneckenende vom vollen Wert auf den Wert "Null" ab.

Wie man der Zeichnung entnehmen kann, ist in radialer Richtung gesehen die Höhe der Zähne des Vorfräsers 5 an der höchsten Stelle nur etwa halb so hoch wie die Höhe der Fräserzähne des Scheibenfräsers 4. Außerdem verläuft die Kopflinie nicht auf einem konzentrischen Kreiszylinder zur geometrischen Fräserachse 10, sondern geneigt hierzu. Eine in der Zeichnung eingezeichnete gedachte Umhüllende 11 um die Zähne des Vorfräsers 5, welche über die anschließende Zahnlücke 12 verlängert ist, hat die Gestalt eines Kegelstumpfs. Dabei entspricht der kleine Kegelstumpfdurchmesser beim Ausführungbeispiel dem Fußkreisdurchmesser 13 des Scheibenfräsers 4, während der große Durchmesser des Kegelstumpfs dem Kopfkreisdurchmesser 14 des Scheibenfräsers 4 entspricht. Mit diesem Sonderfräser wird die Schnecke in gleicher Weise erstellt wie mit dem herkömmlichen Scheibenfräser, nur mit dem Unterschied, daß automatisch ein kegeliger Übergang von der Welle 1 zum Kerndurchmesser der Schnecke 3 hin geschaffen wird.

Mit Ausnahme der besonderen Formgebung entsprechen die Zähne des Vorfräsers 5 denjenigen des Scheibenfräsers 4, und es ist insbesondere jeweils eine gleiche Zähnezahl vorgesehen.

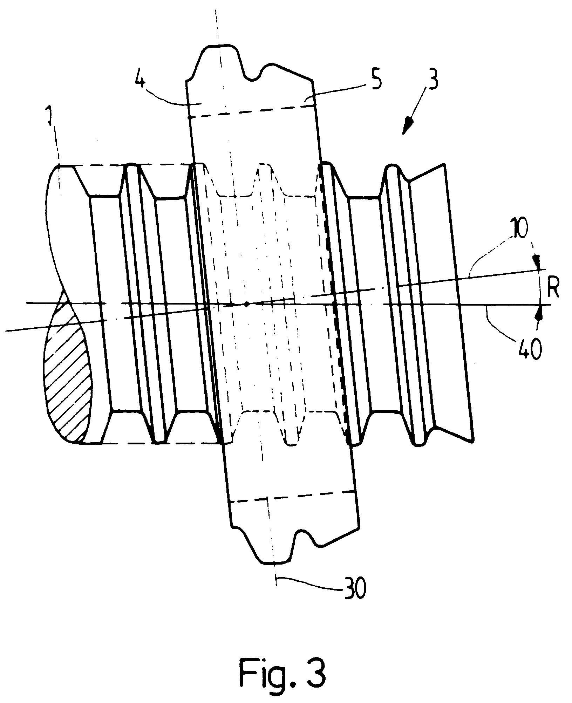

Bezüglich der Figuren 1 und 3 ist noch folgendes zu bemerken:

Beim Fräsen muß die Achse 10 des Fräsers 4, 5 entsprechend der Steigung der Schnecke 3 schräg zur Achse der Schnecke stehen (siehe Figur 3). Die Achse 10 würde also bei einer exakten Darstellung die Zeichenebene nach Figur 1 schneiden. Bevorzugt und beim Ausführungsbeispiel angewandt schneidet die jeweilige Schnittlinie des Fräsers 4, das heißt die Linie, auf der die Nut beim Fräsen ihre volle Tiefe erreicht und die in Figur 3 unterhalb der Achse 10 liegt, die Achse 40 der Schnecke 3 in der Mittelebene 30 des Fräsers 4. Die Zähne des Fräsers 4 sind dann symmetrisch zu dieser Mittelebene 30. Die Zähne des Vorfräsers 5 müssen, abgesehen von dem grundsätzlich anderen Querschnitt (geringere Höhe und schräger Abfall in der Höhe), in ihrer Form gegenüber den Zähnen des Scheibenfräsers 4 korrigiert sein, da sie die Schnecke 3, von der Achse des Fräsers aus betrachtet, nicht an deren höchstem Punkt, sondern seitlich davon schneiden (siehe Abstand R in Figur 3), andererseits jedoch nicht zuviel wegfräsen dürfen, damit in den Flanken der Schnecke keine Stufe entsteht. Bevorzugt lassen die Zähne des Vorfräsers sogar an den Zahnflanken noch etwas Material stehen, damit die endgültige Zahnform durch den Scheibenfräser 4 bestimmt ist. Bei einem Fräsen der Schnecke in zwei Schritten, nämlich zunächst mit dem Vorfräser 5 und dann mit dem Scheibenfräser 4, tritt dieses Problem nicht auf. Allerdings ist dann der Zeitaufwand größer.

## Patentansprüche

1. Welle, insbesondere Ankerwelle eines Elektromotors, mit einer angeformten, gefrästen Schnecke (3), wobei der Fußkreisdurchmesser (7) der Schnecke (3) kleiner ist als der Wellendurchmesser des oder der sich an die Schnecke unmittelbar anschließenden Teils bzw. der Teile der Welle (), dadurch gekennzeichnet, daß am Schneckenanfang (9) und/oder am Schneckenende die Nuttiefe in einem Bereich, der sich über einen Umlauf weniger den Auslaufwinkel des Fräsers (4, 5) erstreckt, in Umlaufrichtung forschreitend konstant und geringer ist als über die übrige Länge der Schnecke (3).

2. Welle nach Anspruch 1, dadurch gekennzeichnet, daß, in axialer Richtung vom Schneckenanfang (1) bzw. Schneckenende her fortschreitend, die Nuttiefe in dem Bereich zunimmt.

3. Welle nach Anspruch 2, dadurch gekennzeichnet, daß die lineare Zunahme von 0 an erfolgt.

4. Welle nach Anspruch 2 oder 3, dadurch gekennzeichnet, daß die Zunahme linear erfolgt.

5. Welle nach Anspruch 4, dadurch gekennzeichnet, daß in dem Bereich die Schräge des Nutbodens (21) so gewählt ist, daß eine gedachte, axiale Verlängerung des Nutbodens (21) am Fuß der jenseitigen Flanke des ersten Schneckenzahnes den Fußkreis der-Schnecke (3) erreicht.

## Claims

1. A shaft, more particularly a rotor shaft of an electric motor of the type including a milled worm (3) formed onto the shaft, and the root line diameter (7) of the worm (3) being smaller than a shaft diameter of a part of the shaft or of parts of the shaft directly adjoining the worm,
**characterized** in that at the beginning of the worm (9) and/or at the end of the worm, the depth of the groove is progressively constant or smaller in the direction of rotation in an area extending over a distance equal to circulation minus the runout angle of the milling machine (4, 5) as compared to the remaining length of the worm (3).

2. A shaft as claimed in claim 1,
**characterized** in that progressing in an axial direction from the beginning of the worm (1) or the end of the worm, the depth of the groove increases in this area.

3. A shaft as claimed in claim 2,
**characterized** in that the linear increase starts at zero.

4. A shaft as claimed in claim 2 or 3,
**characterized** in that the increase occurs linearly.

5. A shaft as claimed in claim 4,
**characterized** in that the slope of the bottom of the groove (21) is chosen such that an imaginary, axial extension of the bottom of the groove (21) reaches the root circle of the worm (3) at the root of the opposite flank of the first worm tooth.

## Revendications

1. Arbre, notamment arbre d'induit d'un moteur électrique, comportant une vis sans fin (3) venue de matière par fraisage, dans lequel le diamètre de cercle de pied (7) de la vis sans fin (3) est inférieur au diamètre d'arbre de la ou des parties de l'arbre (1) qui se raccordent directement à la vis sans fin, caractérisé en ce qu'au début (9) et/ou à la fin de la vis sans fin, la profondeur de gorge est constante, lorsqu'on avance suivant la direction circonférentielle, dans une zone qui s'étend sur une valeur circonférentielle inférieure à l'angle de sortie de la fraise (4, 5). cette profondeur de gorge étant plus faible que sur le reste de la longueur de la vis sans fin (3).

2. Arbre selon la revendication 1, caractérisé en ce que la profondeur de gorge croît dans la zone lorsqu'on avance suivant la direction axiale à partir du début (1) ou de la fin de la vis sans fin.

3. Arbre selon la revendication 2, caractérisé en ce que la croissance linéaire se produit à partir de 0.

4. Arbre selon la revendication 2 ou 3, caractérisé en ce que la croissance a lieu d'une manière linéaire.

5. Arbre selon la revendication 4, caractérisé en ce que, dans la zone, l'inclinaison du fond de gorge (21) est choisi de façon qu'un prolongement axial imaginaire de ce fond de gorge (21) atteigne le cercle de pied de la vis sans fin (3) au pied du flanc du premier filet de vis sans fin qui est situé de l'autre côté.
